# EUROPÄISCHE PATENTSCHRIFT

(11) **EP 2 850 384 B1**
(45) Veröffentlichungstag und Bekanntmachung des Hinweises auf die Patenterteilung: **26.07.2017**
(21) Anmeldenummer: 13713891.3
(22) Anmeldetag: 03.04.2013
(51) Int. Cl.: G01B 11/22, G01M 17/02

(54) **VERFAHREN UND SYSTEM ZUM AUTOMATISCHEN OPTISCHEN INSPIZIEREN EINES LAUFFLÄCHENPROFILS WENIGSTENS EINES RADES EINES FAHRZEUGES**
METHOD AND SYSTEM FOR THE AUTOMATIC OPTICAL INSPECTION OF THE TREAD PATTERN OF AT LEAST ONE WHEEL OF A VEHICLE
PROCÉDÉ ET SYSTÈME D'INSPECTION OPTIQUE AUTOMATIQUE DES SCULPTURES DE LA SURFACE DE ROULEMENT D'AU MOINS UNE ROUE D'UN VÉHICULE

(30) Priorität: 16.05.2012 DE 102012208177
(43) Veröffentlichungstag der Anmeldung: 25.03.2015
(73) Patentinhaber: Robert Bosch GmbH, 70442 Stuttgart (DE)
(72) Erfinder: LUTHER, Marc, 31228 Peine (DE); JANKOWSKA, Klaudia, 30161 Hannover (DE)
(86) Internationale Anmeldenummer: PCT/EP2013/056993
(87) Internationale Veröffentlichungsnummer: WO 2013/170999

(56) Entgegenhaltungen:
- WO-A1-2007/059935
- DE-A1- 1 809 459
- DE-A1-102009 016 498
- DE-A1-102009 026 845

## Beschreibung

Die vorliegende Erfindung betrifft ein Verfahren und ein System zum automatischen optischen Inspizieren eines Laufflächenprofils wenigstens eines Rades eines Fahrzeuges, insbesondere hinsichtlich einer Eignung des Laufflächenprofils bei winterlichen Straßenverhältnissen.

### Stand der Technik

Aus dem Stand der Technik sind Verfahren zum Ermitteln der Profiltiefe eines Fahrzeugreifens bekannt. Diese Verfahren beruhen in der Regel auf Triangulations- bzw. Lichtschnittmethoden, aus denen sich die Profiltiefe des Reifens, zumindest an einem oder mehreren untersuchten Abschnitten des Reifens, bestimmen lässt.

In der DE 10 2009 016 498 A1 wird ein solches Verfahren offenbart, wobei aus einer Position unterhalb der Straßenoberfläche ein Abschnitt einer Reifenlauffläche in seiner Breitenrichtung mit einem linienförmigen Lichtstrahl, in der Regel Laserlicht, bestrahlt wird, und die Reflexion des Lichtstrahls von einem ebenfalls unterhalb der Straßenoberfläche angeordneten Sensor, zum Beispiel eine zweidimensional auflösende Kamera, detektiert wird. Aus dem so aufgenommenen Bild lässt sich mit Hilfe eines Triangulationsverfahrens eine Profiltiefe bestimmen, wobei das Verfahren auch an mehreren Abschnitten des Reifens angewendet werden kann, so dass sich eine Aussage hinsichtlich der Profiltiefe über den Reifen verteilt treffen lässt.

Die DE 195 15 949 C2 offenbart ein Verfahren zur flächenhaften Vermessung und Erfassung des Profilabriebs einer Reifenlauffläche, wobei das Rad, d.h. Reifen und Felge, separat vom Fahrzeug vermessen wird. Auch hier wird die Reifenlauffläche mit einem linien- oder streifenförmigen Lichtstrahl beleuchtet und die Reflexion mit einer Videokamera aufgenommen. Über eine Grauwertanalyse bzw. ein Phasenshiftverfahren kann der Profilabrieb der Lauffläche ermittelt werden.

Aus WO 2007/059935 A1 und DE 10 2009 026845 A1 sind die jeweiligen Oberbegriffe der Ansprüche 1 und 9 bekannt.

### Offenbarung der Erfindung

Die Erfindung schlägt ein Verfahren gemäß Anspruch 1 und ein System gemäß Anspruch 9 vor.

### Vorteile der Erfindung

Der Vorteil des Verfahrens bzw. des Systems ergibt sich daraus, dass automatisch ein Laufflächenprofil wenigstens eines Fahrzeugrades auf seine Eignung bzw. Tauglichkeit für winterliche Straßenverhältnisse, d.h. mit Schnee und/oder Eis ganz oder teilweise bedeckte Fahrbahnoberflächen, hin inspiziert wird und gegebenenfalls ein Hinweis bezüglich der Eignung bzw. Nicht-Eignung für eine winterliche Fahrbahnoberfläche an den Fahrer und/oder an eine dritte Person ausgegeben wird. Somit kann, beispielsweise vor Befahren einer winterlichen Passstraße, ermittelt werden, ob eine Weiterfahrt mit den vorhandenen Reifen aufgrund der herrschenden Witterungsverhältnisse in technischer Hinsicht, d.h. in Bezug auf ausreichende Traktion, möglich ist oder nicht.

Vorteilhafterweise umfasst die Strahlung der wenigstens einen Bestrahlungseinrichtung nicht-kohärente elektromagnetische Strahlung, die zum Beispiel im sichtbaren Bereich liegen kann, aber auch im Infrarotbereich. Durch die Möglichkeit der Auswahl verschiedener Strahlungsarten lassen sich unterschiedliche Eigenschaften inspizieren, wobei es auch möglich ist, verschiedene Strahlungsarten miteinander in ergänzender Weise zu kombinieren.

Es wird bevorzugt, dass die wenigstens eine Bestrahlungseinrichtung das Laufflächenprofil aus wechselweise unterschiedlichen Richtungen bestrahlt. Dabei lassen sich bestimmte Details, wie zum Beispiel die Profiltiefe, eindeutig bestimmen, ohne durch eine ungeeignete Bestrahlungs- bzw. Beleuchtungsrichtung verfälscht zu sein

Es wird weiter bevorzugt, dass der Schritt des Verarbeitens der reflektierten Strahlung eine Bildanalyseauswertung umfasst, vorzugsweise eine Grauwertanalyse, mit Hilfe derer eine Struktur des Laufflächenprofils ermittelt wird. Hierbei lässt sich vor allem eine Profiltiefe relativ gut bestimmen.

Außerdem wird bevorzugt, dass die Bestrahlungseinrichtung und/oder die Strahlendetektionseinrichtung im Wesentlichen in oder auf oder unter der Fahrbahnoberfläche angeordnet ist. Somit ist die Möglichkeit gegeben, je nach örtlicher Beschaffenheit der Fahrbahn die entsprechenden Komponenten anzuordnen oder auch in der Art eines mobilen Systems auszubilden.

Weiterhin wird bevorzugt, dass das Inspizieren des jeweiligen Laufflächenprofils an wenigstens zwei Rädern einer Radachse des Fahrzeuges, vorzugsweise an mehreren Radachsen, gleichzeitig vorgenommen wird. Dadurch wird eine relativ sichere Aussage über die Eignung der Bereifung des gesamten Fahrzeugs für einen Winterbetrieb gewährleistet.

Zudem wird bevorzugt, dass das Inspizieren vorgenommen wird, während sich das Fahrzeug über die Bestrahlungseinrichtung bzw. Strahlendetektionseinrichtung bewegt. Dies hat den Vorteil, dass das Rad oder die Räder nicht vom Fahrzeug demontiert werden müssen bzw. der laufende Verkehrsfluss nicht unterbrochen werden muss.

### Kurze Beschreibung der Zeichnungen

Nachfolgend wird die Erfindung anhand von Ausführungsformen in Verbindung mit den Figuren erläutert, wobei:
- Figur 1: eine schematische Seitenansicht einer ersten Ausführungsform gemäß der Erfindung zeigt;
- Figur 2: eine schematische Seitenansicht einer zweiten Ausführungsform gemäß der Erfindung zeigt;
- Figur 3: eine schematische Seitenansicht einer dritten Ausführungsform gemäß der Erfindung zeigt;
- Figur 4: eine schematische Draufsicht einer vierten Ausführungsform gemäß der Erfindung zeigt;
- Figur 5: eine abschnittsweise Ansicht eines typischen Laufflächenprofils zeigt;
- Figur 6: eine abschnittsweise Ansicht eines typischen Laufflächenprofils eines Sommerreifens zeigt;
- Figur 7: eine abschnittsweise Ansicht eines typischen Laufflächenprofils eines Winterbzw. Ganzjahresreifens zeigt;
- Figur 8a: eine abschnittsweise Ansicht eines typischen Laufflächenprofils in einer Grauwertbilddarstellung zeigt;
- Figur 8b: die abschnittsweise Ansicht des Laufflächenprofils aus Figur 9a nach einer Schwellwertoperation zeigt;
- Figur 8c: die abschnittsweise Ansicht des Laufflächenprofils aus Figur 9b mit eingezeichneten Analysemerkmalen zeigt; und
- Figur 9: eine abschnittsweise Ansicht eines typischen Laufflächenprofils eines für Winterbetrieb ungeeigneten Reifens zeigt.

### Ausführungsformen der Erfindung

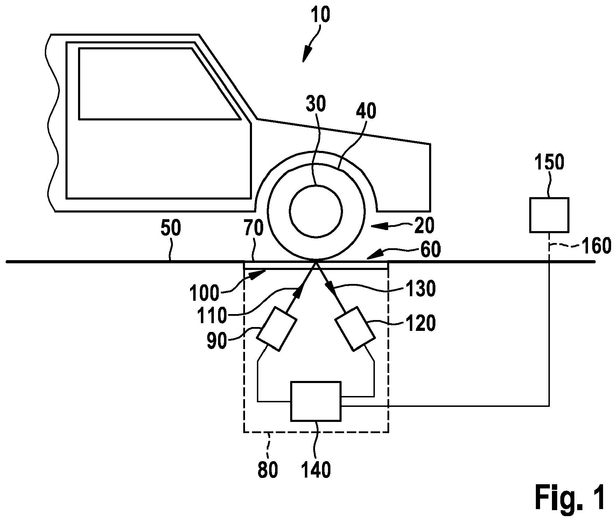

Figur 1 zeigt eine schematische Seitenansicht eines nur teilweise dargestellten Kraftfahrzeugs 10, welches mit einem Vorderrad 20, bestehend aus Felge 30 und Reifen 40, über eine in einer Fahrbahnoberfläche 50 angeordnete Öffnung 60 fährt. Im dargestellten Beispiel ist die Öffnung 60 mit einer Platte 70 verschlossen, welche Teil eines Gehäuses 80 bildet, welches gestrichelt dargestellt ist, da es in die Fahrbahn 50 eingelassen ist und somit nicht sichtbar ist. Für ein besseres Verständnis ist das Gehäuse 80 relativ zum Fahrzeug 10 überdimensioniert dargestellt, es kann in Wirklichkeit wesentlich kleinere Proportionen aufweisen. Auch muss die Platte 70 nicht die in Figur 1 gezeigte Größe aufweisen, sondern kann, wie weiter unten noch erläutert wird, von kleinerem Format sein.

In dem Gehäuse 80 befindet sich eine Bestrahlungseinrichtung 90, welche elektromagnetische Strahlung in Richtung auf die Reifenaufstandsfläche 100 des Reifens 40 auf der Platte 70 strahlt. Die Strahlung, angedeutet durch einen Pfeil 110, muss nicht kohärent sein, und kann beispielsweise frequenzmäßig auch im IR-Bereich oder im optischen Bereich liegen. Die Platte 70 ist aus einem Material, welches die Strahlung im Wesentlichen unverfälscht durchlässt.

Weiterhin ist im Gehäuse 80 eine Strahlendetektionseinrichtung 120 derart angeordnet, dass sie die von der Reifenaufstandsfläche 100 reflektierte Strahlung, angedeutet durch einen Pfeil 130, detektiert. Entsprechend der detektierten Strahlung wird ein bzw. werden mehrere Signale an eine Datenverarbeitungseinrichtung 140 im Gehäuse 80 übermittelt, und dort, wie unten noch erläutert wird, verarbeitet. Ein Ergebnis der Signalverarbeitung wird an eine Ausgabeeinrichtung 150 übertragen, die im dargestellten Beispiel über der Fahrbahn 50 angeordnet ist. Dabei ist auch denkbar, dass ein Ergebnissignal auch drahtlos, angedeutet durch die gestrichelte Linie 160, an die Ausgabeeinrichtung 150 übertragen wird, und zwar mittels Sender/Empfänger (hier nicht dargestellt). Es ist aber auch denkbar, dass das Ergebnissignal in das Fahrzeug 10 übertragen wird, so dass der Fahrer die Information zur Kenntnis nehmen kann.

Die Datenverarbeitungseinrichtung 140 verarbeitet nicht nur die detektierten Signale, sondern steuert auch das Zusammenspiel von Bestrahlungseinrichtung 90, Strahlendetektionseinrichtung 120 und Ausgabeeinrichtung 150. Es ist auch denkbar, dass die Bestrahlungseinrichtung 90, die Strahlendetektionseinrichtung 120 sowie die Datenverarbeitungseinrichtung 140 integral zusammen ausgebildet sind. Im dargestellten Beispiel sind sie zum besseren Verständnis separat dargestellt.

Das Verfahren zum automatischen optischen Inspizieren des Laufflächenprofils bzw. der Reifenaufstandsfläche 100 soll weiter unten erläutert werden. Es sei an dieser Stelle bemerkt, dass die oben beschriebenen Komponenten beispielsweise am Anfang einer Gebirgspass-Straße angeordnet sein können, um Fahrzeuge hinsichtlich ihrer Bereifung auf Wintertauglichkeit zu überprüfen. Dabei erfolgt die Überprüfung sozusagen im Vorbeifahren, d.h. ohne dass das Fahrzeug 10 anhalten muss, so dass der fließende Verkehr im Wesentlichen nicht beeinträchtigt wird.

Das hier beschriebene Verfahren zur Inspizierung der Bereifung soll jedoch nicht die Durchsetzung der gesetzlich geltenden Bestimmungen hinsichtlich einer vorgeschriebenen Verwendung von entsprechender Bereifung bei winterlichen Witterungsverhältnissen ersetzen, sondern eine Beurteilung hinsichtlich der technischen Eignung der Bereifung für entsprechende Witterungsverhältnisse, z.B. im Winter, geben und den oder die Fahrer mit für die jeweiligen Verhältnisse ungeeigneter Bereifung auf diesen Zustand hinweisen, um für den Fahrer gefährliche Situationen zu vermeiden. Das heißt, es wird nicht das Vorhandensein eines sonst bei Winterreifen auf der Reifenflanke angeordneten üblichen "Schneeflockensymbols" bzw. der Buchstaben "M+S" überprüft, welche zwar bei entsprechender Witterung gesetzlich vorgeschrieben sind, jedoch nicht notwendigerweise eine Eignung bei entsprechender Witterung garantieren, wenn zum Beispiel das Laufflächenprofil entsprechend verschlissen ist. Im Übrigen liegt das Aufbringen dieser Kennzeichnungen im Ermessen der Reifenhersteller. Dagegen ist ein Inspizieren der Laufflächenprofile, wie es hier vorgeschlagen wird, wesentlich aussagekräftiger im Hinblick auf eine Eignung bei entsprechenden (winterlichen) Straßenverhältnissen.

Aus diesem Grund ist denkbar, dass die Datenverarbeitungseinrichtung 140 und/oder die Ausgabeeinrichtung 150 auch entsprechende aktuelle Straßenzustandsinformationen empfangen können, welche in die Beurteilung der witterungsbedingten Tauglichkeit einer Bereifung mit einfließen können, da beispielsweise - abhängig von der Witterung - im Winter nicht notwendigerweise Winterreifen notwendig sind, oder umgekehrt auch im Sommer Winterreifen bzw. Reifen mit entsprechendem Profil für das Befahren einer z.B. Gebirgsstraße notwendig wären.

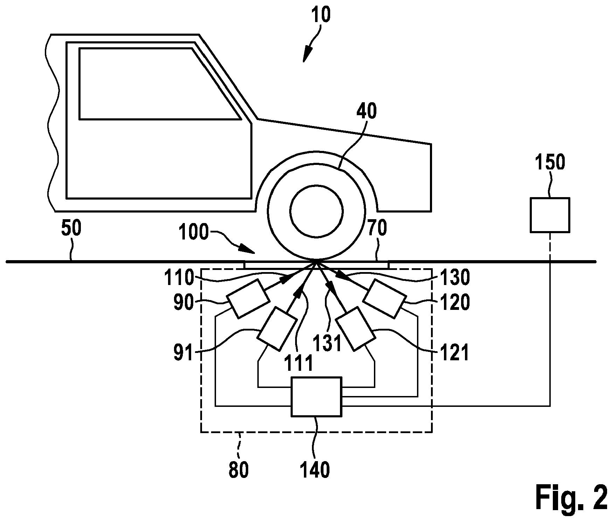

Figur 2 zeigt eine weitere Ausführungsform in einer schematischen Seitenansicht. Hierbei sollen, wie auch in der weiteren Beschreibung, gleiche Bezugszeichen gleiche Komponenten bezeichnen.

Der Unterschied zu der in Figur 1 dargestellten Ausführungsform besteht darin, dass in dem Gehäuse 80 zwei Bestrahlungseinrichtungen 90, 91 sowie zwei Detektionseinrichtungen 120, 121 angeordnet sind. Zusätzlich ist im Gehäuse 80, wie in der vorigen Ausführungsform, eine Datenverarbeitungseinrichtung 140 vorhanden, welche mit den Bestrahlungseinrichtungen 90, 91 und Detektionseinrichtungen 120, 121 über entsprechende Verbindungsleitungen gekoppelt ist.

Die Bestrahlungseinrichtungen 90, 91 unterscheiden sich darin, dass sie die Reifenaufstandsfläche 100 unter unterschiedlichen Winkeln bestrahlen bzw. beleuchten. Eine Beleuchtung der Reifenaufstandsfläche 100 unter unterschiedlichen Winkeln kann für die Bestimmung des Laufflächenprofils des Reifens 40 von Vorteil sein und für eine größere Genauigkeit bei der Bestimmung des Profils dienen. Den Bestrahlungseinrichtungen 90, 91 sind jeweils Detektionseinrichtungen 120, 121 zugeordnet, und zwar entsprechend den Ausfallswinkeln der reflektierten Strahlungen 130, 131.

Analog zu dem in Figur 1 gezeigten Aufbau ist in der Fahrbahnoberfläche 50 eine Platte 70 angeordnet, die Teil des Gehäuses 80 ist. Wiederum ist die Platte 70 aus einem für die Strahlen 110, 111 bzw. 120, 121 transparenten Material gebildet, welches auch ausreichend robust ist, so dass das Fahrzeug 10 darüberfahren kann.

Weiterhin ist die Datenverarbeitungseinrichtung 140, analog zu dem in Figur 1 gezeigten Aufbau, mit einer Ausgabeeinrichtung 150 gekoppelt, welche eine Auswerteergebnis hinsichtlich der geforderten Tauglichkeit des Laufflächenprofils ausgibt. Das Auswerteergebnis kann sowohl optisch als auch akustisch ausgegeben werden, wobei sich die Ausgabeeinrichtung 150 auch innerhalb des Fahrzeugs 10 befinden kann, so dass es vom Fahrer wahrgenommen werden kann.

Es sei noch bemerkt, dass die von den Bestrahlungseinrichtungen 90, 91 ausgegebenen Strahlungen auch unterschiedliche Frequenzen aufweisen können, z.B. im IR-Frequenzbereich und im optischen Frequenzbereich, je nachdem, welche Eigenschaften des Laufflächenprofils bestimmt werden sollen. Dabei können die Strahlungen auch zeitlich unabhängig voneinander ausgegeben werden, oder eine, durch die Datenverarbeitungseinrichtung 140 gesteuerte, zeitliche Beziehung zueinander aufweisen, z.B. in kurzem zeitlichen Abstand voneinander.

Allerdings ist auch vorstellbar, dass die Bestrahlungseinrichtungen 90. 91 im Wesentlichen identisch sind, ebenso wie die Detektionseinrichtungen 120, 121, und sich lediglich, wie oben bereits erwähnt, durch den unterschiedlichen Winkel mit Bezug auf die Reifenaufstandsfläche 100 bzw. das Laufflächenprofil des Reifens 40 unterscheiden.

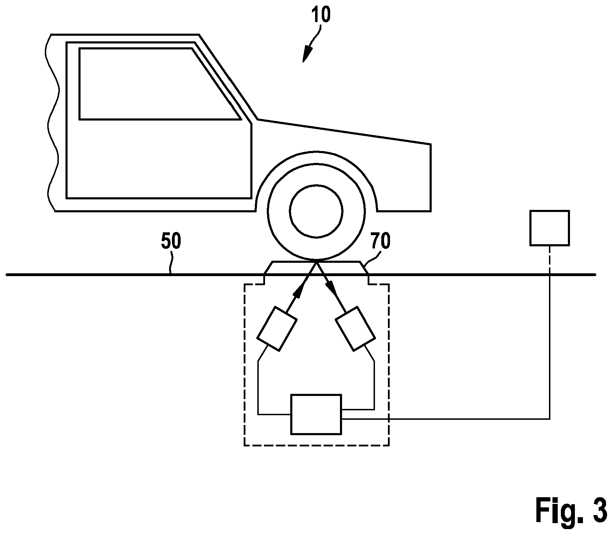

Figur 3 zeigt eine weitere Ausführungsform, die sich von den in Figuren 1 und 2 dargestellten Ausführungsformen dadurch unterscheidet, dass die Platte 70 hier auf der Fahrbahnoberfläche 50 angeordnet ist, und zwar in der Form einer Schwelle, über welche das Fahrzeug 10 jedoch, wenn auch mit verminderter Geschwindigkeit im Vergleich zu den in Figuren 1 und 2 gezeigten Ausführungsformen, hinwegfahren kann. Vorzugsweise beträgt die Höhe der Platte 70 nicht mehr als 70 mm. Bei dieser Ausführungsform bemerkt der Fahrer aufgrund der Höhe der Platte 70, dass er über ein Hindernis hinwegfahren würde und vermindert dementsprechend die Fahrgeschwindigkeit.

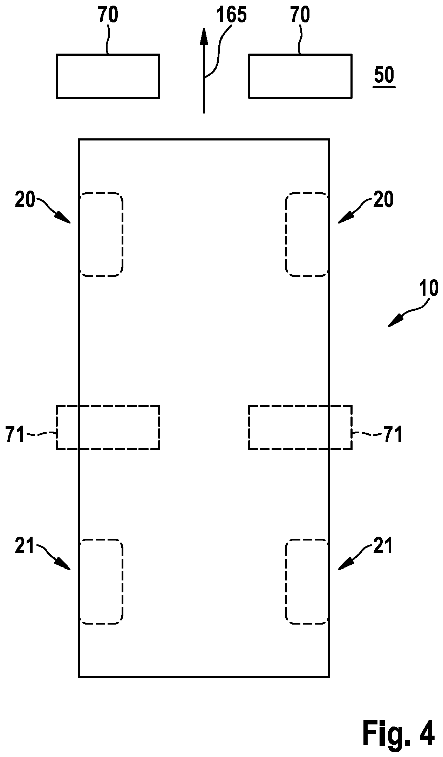

Figur 4 zeigt eine Draufsicht auf ein schematisch dargestelltes Fahrzeug 10 mit Vorderrädern 20, 20 und Hinterrädern 21, 21, wobei sich das Fahrzeug 10 in Richtung des Pfeiles 165 bewegt. Dargestellt sind außerdem zwei in oder auf der Fahrbahnoberfläche 50 angeordnete Platten 70, 70, welche nach einer der in Figuren 1 bis 3 dargestellten Ausführungsformen ausgebildet sein können. Nicht dargestellt sind jeweils die unterhalb der Platten 70, 70 angeordneten Bestrahlungseinrichtungen, Strahlendetektionseinrichtungen bzw. Datenverarbeitungseinrichtungen.

Anhand der Figur 4 soll gezeigt werden, dass die Laufflächenprofile beider Vorderräder 20, 20 gleichzeitig inspiziert werden, wenn das Fahrzeug 10 über die Platten 70 hinwegfährt. Wie erkennbar ist, sind die Platten 70, 70 so angeordnet, dass nach den Vorderrädern 20, 20 auch die Hinterräder 21, 21 inspiziert werden, wenn sich das Fahrzeug 10 in Richtung des Pfeiles 165 bewegt.

Optional können auch Platten 71, 71 (gestrichelt dargestellt) mit entsprechend darunter angeordneten Bestrahlungseinrichtungen, Strahlendetektionseinrichtungen bzw. Datenverarbeitungseinrichtungen vorhanden sein, so dass die Laufflächenprofile der Hinterräder 21, 21 zusammen mit den Laufflächenprofilen der Vorderräder 20, 20 inspiziert werden können. Auf die Darstellung einer entsprechenden Ausgabeeinrichtung wurde hier verzichtet.

Vorzugsweise haben die Platten 70, 70 bzw. 71, 71 eine Breite, d.h. quer zur Bewegungsrichtung des Fahrzeugs 10, von mindestens 700 mm, wobei die darunter befindlichen Bestrahlungseinrichtungen bzw. Strahlendetektionseinrichtungen so ausgelegt sind, dass die gesamte Breite der Platten 70, 70, 71, 71 für das Inspizieren nutzbar ist. Bei einer Erfassungsbreite von mindestens 700 mm ist sichergestellt, dass möglichst viele Fahrzeugklassen vom Kleinwagen bis zum Leicht-LKW erfasst werden können.

Um zu gewährleisten, dass alle Reifen an allen zu inspizierenden Fahrzeugen erfasst werden können, können Leiteinrichtungen dafür sorgen, dass alle Fahrzeuge die Platten bzw. Bildaufnahmeeinrichtungen überfahren.

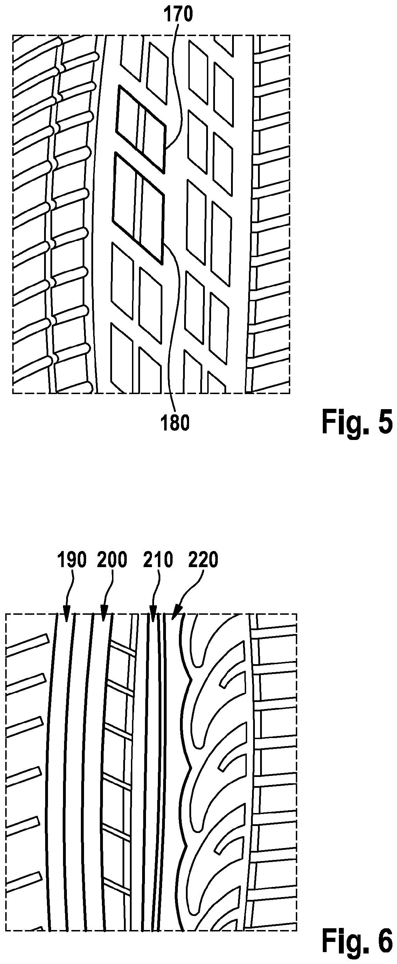

Figur 5 zeigt schematisch ein beispielhaftes Abbild eines Winter- bzw. Ganzjahresreifens, welches mit den oben beschriebenen Detektions- bzw. Bildaufnahmeeinrichtungen aufgenommen worden ist. Dabei sind insbesondere sogenannte Blöcke zu erkennen, wobei in Figur 5 beispielhaft zwei Blöcke 170, 180 mit fetter Umrandung dargestellt sind. Diese Blöcke sind typischerweise bei Winter- bzw. Ganzjahresreifen vorhanden, und dienen dazu, die Traktion zu erhöhen.

Figur 6 zeigt schematisch ein beispielhaftes Abbild eines Sommerreifens, welches mit den oben beschriebenen Detektions- bzw. Bildaufnahmeeinrichtungen aufgenommen worden ist. Dabei sind insbesondere durchgehende Längsstrukturen zu erkennen, wobei in Figur 6 beispielhaft Längsstrukturen 190, 200, 210, 220 mit fetter Umrandung markiert sind. Diese Längsstrukturen sind typisch für Sommerreifen, und dienen dazu, die Querführung zu verbessern und einen stabileren Geradeauslauf zu erzielen. In der Regel sind diese Längsstrukturen asymmetrisch angeordnet, wodurch sich eine Laufrichtungsbindung der Reifen ergibt.

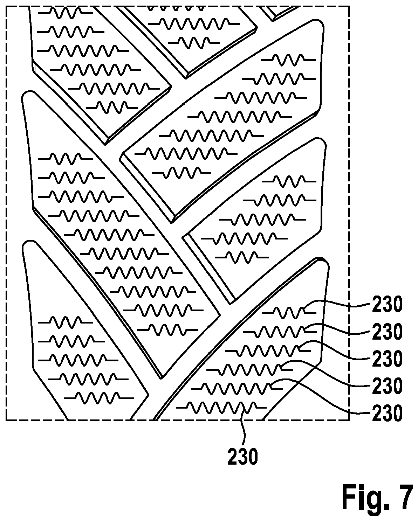

Figur 7 zeigt wieder schematisch ein beispielhaftes Abbild eines Winter- bzw. Ganzjahresreifens, welches mit den oben beschriebenen Detektions- bzw. Bildaufnahmeeinrichtungen aufgenommen worden ist. Dabei sind, im Unterschied zur Figur 5, in den Blöcken sogenannte Lamellen angeordnet, welche in Figur 7 beispielhaft für einen Block jeweils mit den Bezugszeichen 230 gekennzeichnet sind. Diese Lamellen erstrecken sich quer zur Laufrichtung, und verbessern die Traktion auf Schnee und Eis, d.h. sie "verkrallen" sich mit dem Untergrund.

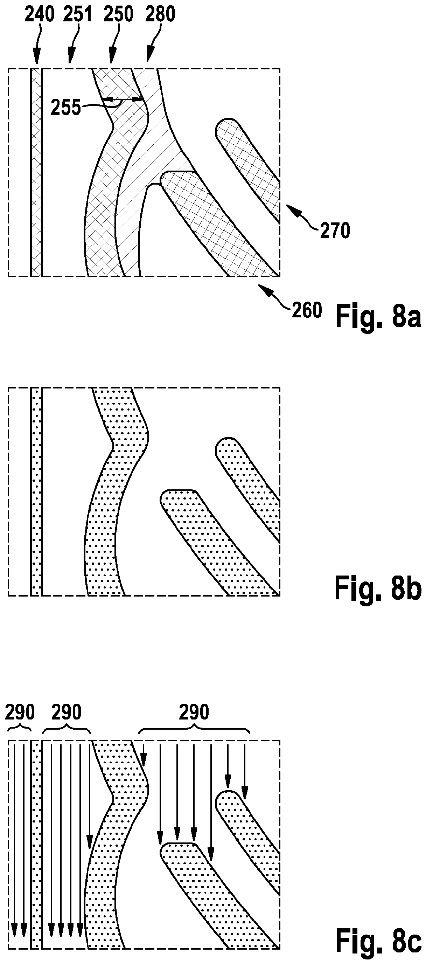

Figuren 8a bis 8c zeigen jeweils einen Ausschnitt eines Abbilds eines Laufflächenprofils, welches ursprünglich mit den oben beschriebenen Detektions- bzw. Bildaufnahmeeinrichtungen aufgenommen worden ist, wobei in Figuren 8a bis 8c jeweils durch die Datenverarbeitungseinrichtung modifizierte Darstellungen gezeigt sind, welche für eine Inspizierung des untersuchten Laufflächenprofils herangezogen werden.

Figur 8a zeigt ein Grauwertbild des Laufflächenprofils, welches für die Messung der Profiltiefe herangezogen werden kann. Dabei kann für die Aufnahme eines solchen Bildes die Beleuchtung (bzw. Bestrahlung) der Reifenaufstandsfläche mehrfach erfolgen, auch unter unterschiedlichen Winkeln (siehe Figur 2), um so einen deutlichen Schattenwurf der Profilrillen, durch Kreuzschraffur gekennzeichnet mit Bezugszeichen 240 bis 270, zu erzielen. Die Breite des Schattenwurfs gibt die Profiltiefe wieder, in Figur 8a beispielsweise an dem Schattenwurf 250 zu erkennen, wobei die Profiltiefe einer Strecke, in Figur 8a mit einem Doppelpfeil 251 gekennzeichnet, in horizontaler Richtung innerhalb der kreuzschraffierten Fläche entspricht, und zwar von der Grenzfläche der nicht-schraffierten Fläche 251, welche dem äußersten Umfang des Reifens entspricht, bis zur Grenzfläche der einfachschraffierten Fläche 280, welche sozusagen dem Boden des Reifens entspricht.

Figur 8b zeigt ein Abbild des gleichen Ausschnitts aus Figur 8a, jedoch nach einer in der Datenverarbeitungseinrichtung durchgeführten Schwellwertoperation. Hierbei ist zu erkennen, dass Details, die in Figur 8a durch kreuzschraffierte bzw. einfach-schraffierte Flächen gekennzeichnet waren, nicht mehr zu erkennen sind, sondern lediglich entweder weiße Flächen oder punktierte Flächen (die Art der Darstellung ist hierbei beliebig). Insbesondere ist die Profilrille 280 (siehe Figur 8a) nicht mehr zu erkennen. Eine Lösung wäre eine Überlagerung mit einer oder mehreren weiteren Aufnahmen mit jeweils einer Beleuchtung aus unterschiedlichen Richtungen.

Figur 8c zeigt ein Abbild des gleichen Ausschnitts aus Figur 8b, jedoch mit vertikalen Pfeilen bzw. Pfade 290, wobei die Tatsache, dass diese Pfade 290 nicht durch Rillen unterbrochen sind, auf das Vorhandensein von Rippen hindeuten, woraus eindeutig auf das Abbild eines Sommerreifen-Profils gefolgert werden kann.

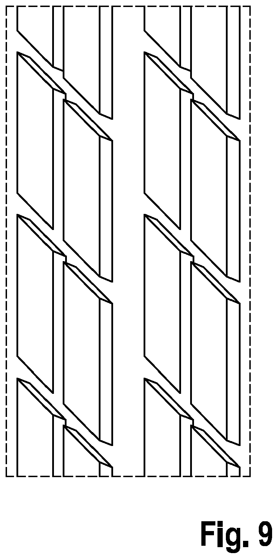

Figur 9 zeigt schließlich einen Ausschnitt eines Abbilds eines Laufflächenprofils, bei dem weder Rippen noch Lamellen erkennbar sind, so dass eine eindeutige Zuordnung zu Winter- oder Sommerreifen aus dem Bild nicht möglich ist. Es könnte sich um einen Sommerreifen mit reinem Blockprofil handeln, oder um einen verschlissenen Winterreifen, bei dem die typischen Lamellen nicht mehr vorhanden sind. In beiden Fällen ist das Profil jedoch auf Grundlage dieser Ergebnisse für einen Winterbetrieb nicht mehr geeignet. Lediglich die Messung einer ausreichenden Profiltiefe könnte eine Eignung für einen Winterbetrieb noch rechtfertigen.

## Patentansprüche

1. Verfahren zum automatischen optischen Inspizieren eines Laufflächenprofils wenigstens eines Rades (20; 21) eines Fahrzeuges (10), die folgenden Schritte umfassend:
- Bestrahlen wenigstens eines Abschnitts des Laufflächenprofils mit Strahlung (110; 111) wenigstens einer Bestrahlungseinrichtung (90; 91);
- Detektieren der von dem Laufflächenprofil reflektierten Strahlung (130; 131) mit wenigstens einer Strahlendetektionseinrichtung (120;121);
- Verarbeiten der reflektierten Strahlung (130;131) mit einer Datenverarbeitungseinrichtung (140) ; und
- Ausgeben eines Auswerteergebnisses hinsichtlich einer zweidimensionalen und/oder dreidimensionalen Struktur des Laufflächenprofils im Hinblick auf eine Eignung für winterliche Straßenverhältnisse;
**dadurch gekennzeichnet, dass** durch die Bestrahlung des wenigstens einen Abschnitts des Laufflächenprofils ein Schattenwurf der Profilrillen erzeugt wird, und dass aus der Breite des Schattenwurfes eine Profiltiefe bestimmt wird..

2. Verfahren nach Anspruch 1, wobei die Strahlung der wenigstens einen Bestrahlungseinrichtung (90; 91) nicht-kohärente elektromagnetische Strahlung ausstrahlt, vorzugsweise im sichtbaren Bereich.

3. Verfahren nach Anspruch 1 oder 2, wobei die wenigstens eine Bestrahlungseinrichtung (90; 91) das Laufflächenprofil aus wechselweise unterschiedlichen Richtungen bestrahlt.

4. Verfahren nach einem der vorangehenden Ansprüche, wobei das Laufflächenprofil durch unterschiedliche Bestrahlungseinrichtungen (90; 91) mit jeweils unterschiedlichen Strahlungen gleichzeitig bestrahlt wird, und wobei die unterschiedlichen Strahlungen durch jeweils unterschiedliche Strahlendetektionseinrichtungen (120; 121) detektiert werden.

5. Verfahren nach einem der vorangehenden Ansprüche, wobei der Schritt des Verarbeitens der reflektierten Strahlung eine Bildanalyseauswertung umfasst, vorzugsweise eine Grauwertanalyse, mit Hilfe derer eine Struktur des Laufflächenprofils und /oder eine Profiltiefe ermittelt wird.

6. Verfahren nach einem der vorangehenden Ansprüche, wobei die Bestrahlungseinrichtung (90; 91) und/oder die Strahlendetektionseinrichtung (120; 121) im Wesentlichen in oder auf oder unter der Fahrbahnoberfläche (50) angeordnet sind.

7. Verfahren nach einem der vorangehenden Ansprüche, wobei das Inspizieren des jeweiligen Laufflächenprofils an wenigstens zwei Rädern einer Radachse des Fahrzeuges, vorzugsweise an mehreren Radachsen, gleichzeitig vorgenommen wird.

8. Verfahren nach einem der vorangehenden Ansprüche, wobei das Inspizieren vorgenommen wird, während sich das Fahrzeug (10) über die Bestrahlungseinrichtung (90; 91) bzw. Strahlendetektionseinrichtung (120; 121) bewegt.

9. System zur automatischen optischen Inspektion eines Laufflächenprofils wenigstens eines Rades (20; 21) eines Fahrzeuges (10), umfassend:
- wenigstens eine Bestrahlungseinrichtung (90; 91) zur Ausgabe einer Strahlung (110; 111);
- wenigstens eine Strahlendetektionseinrichtung (120; 121) zum Detektieren der von dem Laufflächenprofil reflektierten Strahlung (139; 131);
- eine Datenverarbeitungseinrichtung (140) zum Verarbeiten der reflektierten Strahlung (130; 131); und
- eine Ausgabeeinrichtung (150) zum Ausgeben eines Auswerteergebnisses hinsichtlich einer zweidimensionalen und/oder dreidimensionalen Struktur des Laufflächenprofils im Hinblick auf eine Eignung für winterliche Straßenverhältnisse
**dadurch gekennzeichnet, dass** durch die Datenverarbeitungseinrichtung (140) aus der Breite eines Schattenwurfes der Profilrillen eine Profiltiefe bestimmbar ist.

## Claims

1. Method for automatically optically inspecting a tread profile of at least one wheel (20; 21) of a vehicle (10), comprising the following steps:
- irradiating at least one section of the tread profile with radiation (110; 111) from at least one irradiation device (90; 91);
- detecting the radiation (130; 131) reflected by the tread profile using at least one radiation detection device (120; 121);
- processing the reflected radiation (130; 131) with a data processing device (140); and
- outputting an evaluation result with respect to a two-dimensional and/or three-dimensional structure of the tread profile as regards a suitability for wintry road conditions;
**characterized in that** a shadow of the profile grooves is produced by irradiating the at least one section of the tread profile, and **in that** a profile depth is determined from the width of the shadow.

2. Method according to Claim 1, wherein the radiation from the at least one irradiation device (90; 91) emits non-coherent electromagnetic radiation, preferably in the visible range.

3. Method according to Claim 1 or 2, wherein the at least one irradiation device (90; 91) irradiates the tread profile from different directions in alternation.

4. Method according to one of the preceding claims, wherein the tread profile is irradiated by different irradiation devices (90; 91) with in each case different types of radiation at the same time, and wherein the different types of radiation are detected by in each case different radiation detection devices (120; 121).

5. Method according to one of the preceding claims, wherein the step of processing the reflected radiation comprises an image analysis evaluation, preferably a greylevel analysis, by way of which a structure of the tread profile and/or a profile depth is ascertained.

6. Method according to one of the preceding claims, wherein the irradiation device (90; 91) and/or the radiation detection device (120; 121) are arranged substantially in or on or under the runway surface (50).

7. Method according to one of the preceding claims, wherein inspecting the respective tread profile is carried out on at least two wheels of an axle of the vehicle, preferably on a plurality of axles, at the same time.

8. Method according to one of the preceding claims, wherein inspecting is effected while the vehicle (10) moves over the irradiation device (90; 91) and/or the radiation detection device (120; 121).

9. System for automatically optically inspecting a tread profile of at least one wheel (20; 21) of a vehicle (10), comprising:
- at least one irradiation device (90; 91) for outputting a radiation (110; 111);
- at least one radiation detection device (120; 121) for detecting the radiation (139; 131) that is reflected by the tread profile;
- a data processing device (140) for processing the reflected radiation (130; 131); and
- an output device (150) for outputting an evaluation result with respect to a two-dimensional and/or three-dimensional structure of the tread profile as regards a suitability for wintry road conditions,
**characterized in that** a profile depth is able to be determined by the data processing device (140) from the width of a shadow of the profile grooves.

## Revendications

1. Procédé d'inspection optique automatique des sculptures de la surface de roulement d'au moins une roue (20 ; 21) d'un véhicule (10), comprenant les étapes consistant à :
- exposer au moins une section des sculptures de la surface de roulement à un rayonnement (110 ; 111) d'au moins un dispositif d'exposition à des rayonnements (90 ; 91) ;
- détecter le rayonnement réfléchi (130 ; 131) par les sculptures de la surface de roulement au moyen d'au moins un dispositif de détection de rayons (120 ; 121) ;
- traiter le rayonnement réfléchi (130 ; 131) dans un dispositif de traitement de données (140) ; et
- fournir en sortie un résultat d'évaluation concernant une structure bidimensionnelle et/ou tridimensionnelle des sculptures de la surface de roulement du point de vue de leur adéquation à des conditions de circulation hivernales ;
**caractérisé en ce qu'**une ombre portée des rainures de la bande de roulement est générée par exposition à un rayonnement de l'au moins une section des sculptures de bande de roulement et **en ce qu'**une profondeur de la bande de roulement est déterminée à partir de la largeur de l'ombre portée.

2. Procédé selon la revendication 1, dans lequel le rayonnement de l'au moins un dispositif d'exposition à des rayonnements (90 ; 91) est un rayonnement électromagnétique non cohérent, de préférence dans le domaine visible.

3. Procédé selon la revendication 1 ou 2, dans lequel le rayonnement de l'au moins un dispositif d'exposition à des rayonnements (90 ; 91) est incident sur les sculptures de la surface de roulement depuis des directions différentes pouvant être sélectionnées.

4. Procédé selon l'une quelconque des revendications précédentes, dans lequel les sculptures de la surface de roulement sont exposées simultanément à des rayonnements respectifs différents par différents dispositifs d'exposition à des rayonnements (90 ; 91) et dans lequel les différents rayonnements sont détectés par des dispositifs de détection de rayons (120 ; 121) différents.

5. Procédé selon l'une quelconque des revendications précédentes, dans lequel l'étape de traitement du rayonnement réfléchi comprend une évaluation par analyse d'image, de préférence une analyse de niveaux de gris, à l'aide de laquelle une structure des sculptures de la surface de roulement et/ou une profondeur de la bande de roulement est/sont déterminée(s).

6. Procédé selon l'une quelconque des revendications précédentes, dans lequel le dispositif d'exposition à des rayonnements (90 ; 91) et/ou le dispositif de détection de rayons (120 ; 121) est/sont disposé(s) dans ou sur ou sous la surface de la chaussée (50).

7. Procédé selon l'une quelconque des revendications précédentes, dans lequel l'inspection des sculptures de la surface de roulement respective est réalisée simultanément sur au moins deux roues d'un essieu du véhicule, de préférence sur plusieurs essieux.

8. Procédé selon l'une quelconque des revendications précédentes, dans lequel l'inspection est réalisée pendant que le véhicule (10) se déplace sur le dispositif d'exposition à des rayonnements (90 ; 91) ou sur le dispositif de détection de rayons (120 ; 121) .

9. Système d'inspection optique automatique des sculptures de la surface de roulement d'au moins une roue (20 ; 21) d'un véhicule (10), comprenant :
- au moins un dispositif d'exposition à des rayonnements (90 ; 91) destiné à délivrer un rayonnement (110 ; 111) ;
- au moins un dispositif de détection de rayons (120 ; 121) destiné à détecter le rayonnement réfléchi (130 ; 131) par les sculptures de la surface de roulement ;
- un dispositif de traitement de données (140) destiné à traiter le rayonnement réfléchi (130 ; 131) ; et
- un dispositif de sortie (150) destiné à fournir en sortie un résultat d'évaluation concernant une structure bidimensionnelle et/ou tridimensionnelle des sculptures de la surface de roulement du point de vue de leur adéquation à des conditions de circulation hivernales,
**caractérisé en ce qu'**une profondeur de la bande de roulement peut être déterminée par le dispositif de traitement de données (140) à partir de la largeur de l'ombre portée des rainures de la bande de roulement.
